Europäisches Patentamt

European Patent Office

Office européen des brevets

(19)

(11) **EP 1 146 220 A1**

(12) **EUROPEAN PATENT APPLICATION**

(43) Date of publication:
**17.10.2001 Bulletin 2001/42**

(51) Int Cl.[7]: **F02M 25/12**, F02M 27/04,
C01B 13/11

(21) Application number: **01109005.7**

(22) Date of filing: **11.04.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **12.04.2000 JP 2000110764** | (71) Applicant: **Kondo, Masanori**<br>**Fukuoka 810-0014 (JP)**<br><br>(72) Inventors:<br> • **Ohta, Yoshio**<br>  **Kasuya-gun, Fukuoka 811-2106 (JP)**<br> • **Kondo, Masanori**<br>  **Fukuoka 810-0014 (JP)** |

(54) **Method for reducing particulates emissions from a diesel engine**

(57)    This invention provides a method for operating a diesel engine with reduced emission of particulates as well as HC, CO, NOx, and SOx, comprising a corona discharge device for producing ozone in the air intake system, the corona discharge device comprising at least one first electrode (12), at least one second electrode (13) positioned a distance from the first electrode and a dielectric material (11) positioned between the first electrode and the second electrode; and a high frequency power supply (44) having an operational frequency of at least about 1,000 Hz adapted to provide electrical power to the corona discharge device. These harmful emissions from diesel engine are reduced, partly or completely, due to the complete combustion of fuel by supplying enough amount of ozone into the combustion chamber of engine. The particular advantageous feature of this invention is that it can be installed easily and inexpensively to existing and new engines without modifying the operating condition or the structure of engine itself.

EP 1 146 220 A1

**Description**

TECHNICAL FIELD

In this invention, the term "diesel engine" is meant to include all compression-ignition engines, for both mobile (including marine) and stationary power plants and of the two-stroke per cycle, four-stroke per cycle and rotary types.

The invention relates to reducing harmful emissions from diesel engines such as particulates, gaseous hydrocarbon (HC), SOx, NOx and carbon monoxide (CO). These harmful emissions can be reduced according to the invention, principally, by the complete combustion of fuel without modifying the operating condition of diesel engine.

Diesel engines have a number of important advantages over engines of the Otto type. Among them are fuel economy, ease of repair and long life. From the standpoint of emissions, however, they present problems more severe than their spark-ignition counterparts. Emission problems relate to particulates, unburned hydrocarbons (HC), sulfur oxides ($SO_x$), nitrogen oxides ($NO_x$), and carbon monoxide (CO). The particulates themselves have a number of components--each independently troublesome. Particulates comprise a carbon component, a soluble organic fraction (SOF), and $SO_3$. As engine modifications are made to reduce particulates and unburned hydrocarbons, the $NO_x$ emissions increase. Accordingly, some means other than engine modification is needed for new engines and existing engines cannot be easily modified.

Catalytic oxidizers have been proposed to reduce the emission of particulates and gaseous hydrocarbons and carbon monoxide from diesel engines. These devices are primarily intended to oxidize what is referred to as the soluble organic fraction (SOF) of particulates while preferably also oxidizing unburned hydrocarbons and carbon monoxide to reduce emissions of these. Flow-through catalytic oxidizers direct the flow of particulates through a maze of catalyzed surfaces which contact the particulates without either trapping them as done by diesel particulate traps or reducing $NO_x$ the way triple effect catalysts do for gasoline engines. Catalysts typically employed to reduce particulates and unburned hydrocarbons after combustion, tend to oxidize $SO_2$ to $SO_3$ --thereby converting a benign gaseous component to a form which adheres to the particulates as aqueous sulfuric acid--an unsatisfactory compromise. Additionally, the catalytic surfaces are expensive and rapidly foul.

Although catalytic oxidizers reduce harmful emissions from diesel engine to some extent, they are far less satisfactory to meet the current and future environmental regulations against these emissions, particularly particulates. Economical means for more complete reduction of particulates are strongly desired without modifying diesel engine.

BACKGROUND ART

Diesel engines are used in passenger cars and, to a greater degree, in trucks and buses; however, because of their wide use, their emissions can have a significant, negative environmental impact. Also, even modest uses in environments such as mining, can be a problem. Interest is strong in developing means to operate diesel engines while controlling their most troublesome characteristics.

Diesel particulates, their effect and control, are at the center of much concern and controversy. Their chemistry and environmental impact present complex issues. Very generally, the diesel particulate matter is principally solid particles of carbon and metal compounds with adsorbed hydrocarbons, sulfates and aqueous species. Among the adsorbed species is a soluble organic fraction (SOF) known to contain aldehydes and polycyclic aromatic hydrocarbons (also called PAH's). Some of these organics have been reported to be potential carcinogens. Unburned hydrocarbons are related to the characteristic diesel odor and include aldehydes such as formaldehyde and acrolein. The aldehydes, like the carbon monoxide, are the products of incomplete combustion.

Unfortunately, increasing the recovery of particulates by utilizing a trap device, can decrease fuel economy by increasing exhaust back pressure due to particulates buildup within the trap. A solution to this problem is to use two trap devices alternatively, which enable to burn out particulates buildup to the one trap while using the other. However, this method requires a significant modification to the exhaust system such as heaters, a high capacity power supply and a control system, which would drastically increase the cost. Another solution to this problem is to add fuel additive(s) that decrease the ignition temperature of particulates buildup within the trap, which is typically 550°C without any additives. An example of such fuel additives is Cerium Oxide (Eolys®, Rhodia S.A., France), which decreases the ignition temperature to 450°C. However,

Moreover, the various pollutants seem to be interrelated, with reduction of one sometimes increasing levels of another. By modifying combustion to achieve more complete oxidation, decreases can be achieved for pollutants resulting from incomplete combustion, but $NO_x$ is typically increased under these conditions. $NO_x$, principally NO and $NO_2$, contributes to smog, ground level ozone formation and acid rain. NO is produced in large quantities at the high combustion temperatures associated with diesel engines. The $NO_2$ is formed principally by the post oxidation of NO in the diesel exhaust stream. Several attempts have been made to reduce $NO_x$, such as by retarding engine timing, exhaust gas recirculation, and the like; however, with current technology, there is a tradeoff between NO.sub.x and particulates. When NO.sub.x, is reduced, particulate emissions increase. And, as noted, conditions favoring low emissions of NO.sub.x often favor production of increased levels of CO and HC. It would be desirable to have a catalyst system which control particulate emissions to a level permitting the use of known means to reduce NO.sub.x.

Consequently, there is an urgent need for an improved means for rendering the exhaust from diesel engines more environmentally benign, and, especially to enable this without increasing the cost, deteriorating the efficiency of engine, and modifying the operating condition or the structure of engine itself.

As noted by Gibboney, Jr. in U.S. Pat. No. 5,487,874, automobiles run better after a thunderstorm. This phenomenon is primarily caused by the natural conditions that exist after an electrical storm, namely, the presence of ozone and an increase in the relative amount of negative ions in the air. Ozone easily decomposes to release an oxygen radical that strongly catalyzes the combustion of fuel causing a chain reaction, aids the complete combustion of fuel, and thereby would reduce the emissions of particulates, HC and CO, those of which are generated due to incomplete combustion of fuel, without changing the operating conditions of engine such as increasing combustion temperature, thereby increasing the emission of NO.sub.x, by changing the ratio of air and fuel, nor even modifying the structure of engine itself. A number of inventions has proposed to use ozone or related compounds in order to improve the efficiency of engine.

In U.S. Pat. Nos. 1,333,836 and 1,725,661, it was proposed to provide ozone producing apparatus in association with the air intake of the carburetor. These inventions primarily intended to increase the oxygen content, which is otherwise restricted to a value of about 20% due to atmospheric concentration of oxygen, charged to the combustion chamber in order to improve the efficiency of engine, and thereby did not intend to reduce harmful emissions from any types of engines. Also, there was no condition specified in detail to produce ozone in these inventions.

In U.S. Pat. No. 4,195,606, combustion air for an internal engine is treated to activate the oxygen molecules prior to mixing it with the fuel by photochemically activating the oxygen with ultraviolet radiation from a germicidal lamp at a frequency of about 2537 angstroms. However, U.S. Pat. No. 5,692,481 stated that this range of frequency did not produce ozone at all, and the ultraviolet light emitting lamp should be a mercury vapor arc lamp which emits light having a wavelength of about 185 nanometers for efficiently producing ozone. The amount of ozone produced by this method may be enough to improve the efficiency of spark-ignition type engine, to increase its power, and hence, mileage, and to reduce the amount of HC and/or CO emissions. However, it has been proven by the inventors that the amount is far less satisfactory for reducing harmful emissions from compression-ignition type engine, *i.e.*, diesel engine; especially particulates.

U.S. Pat. No. 5,487,874 proposed the apparatus that generates negatively-charged molecules of the formula [MO.sub.x ].sup.-, where M is a positive ion, O is oxygen and x is a number at least equal to 3, by applying high voltage dc electrical field between two electrodes in the air intake system. Although this method may be more effective than ultraviolet light emitting lamp that produce ozone above mentioned, MO.sub.x (preferably M = Al) could readily deposit inside the air intake system (air filter) or combustion camber that could, in turn, deteriorate the efficiency of engine.

U.S. Pat. No. 5,596,974 proposed a system in which a high RF voltage applied to spark plug wire in an automotive ignition that causes a continuous corona discharge at the tip of the spark plug internal to the engine. This system effectively produces ozone in spark-ignition type engine, however, not in compression-ignition type engine, *i.e.*, diesel engine.

All of these inventions except US. Pat. No. 5,692,481 intended primarily to improve the efficiency of engines to some extent, however, not to reduce harmful emissions, especially particulates, from diesel engine. A method, a system, or an apparatus to produce enough amount of ozone to accomplish it, which can be installed easily and inexpensively to both existing and new engines to meet the current and future environmental regulations, is strongly desired.

DISCLOSURE OF INVENTION

It is a primary object of the invention to provide a method for reducing emission of particulates from diesel engine, without modifying the operating condition or the structure of engine itself, which can be installed easily and inexpensively to both existing and new engines.

It is another object of the invention to provide a method for reducing emissions from diesel engine due to the incomplete combustion of fuel such as hydrocarbon (HC) and carbon monoxide (CO), without modifying the operating condition or the structure of engine itself, which can be installed easily and inexpensively to existing and new engines.

It is yet another object of the invention to provide a method for reducing emissions of NO.sub.x and SO.sub.x from diesel engine, without modifying the operating condition or the structure of engine itself, which can be installed easily and inexpensively to existing and new engines.

All of these objects can be accomplished simultaneously by installing a corona discharge device for producing ozone in the air intake system of engine, the corona discharge device comprising at least one first electrode, at least one second electrode positioned a distance from the first electrode and a dielectric material positioned between the first electrode and the second electrode that are connected to a high frequency power supply having an operational frequency of at least about 1,000 Hz adapted to provide electrical power to the corona discharge device.

The emissions of particulates, HC and CO from diesel engine are reduced, partly or completely, due to the complete combustion of fuel by supplying enough amount of ozone into the combustion chamber of engine. The amount of NO.sub.x generation is basically unchanged because combustion temperature is unchanged. However, the emission of NO.sub.x is reduced due to the following reactions;

$$3NO_2 + H_2O \rightarrow 2HNO_3 + NO$$

where $NO_2$ is produced from NO.sub.x by the strong oxidizing ability of ozone, and $H_2O$ is produced by the complete combustion of hydrocarbon. Resulted HN03 is easily removed from exhaust gas by passing through a cold filter before emission to the environment, and re-generated NO is further oxidized to $NO_2$ by ozone to be removed. Also, the emission of SO.sub.x is reduced due to the following reactions,

$$SO_3 + H_2O \rightarrow H_2SO_4$$

where $SO_3$ is produced from SO.sub.x by the strong oxidizing ability of ozone, and $H_2O$ is produced by the complete combustion of hydrocarbon. Resulted $H_2SO_4$ is easily removed from exhaust gas by passing through a cold filter before emission to the environment.

A particular advantageous feature of the present invention is that it produces more than 100 times amount of ozone compared to the ultraviolet light proposed in US. Pat. No. 5,692,481, and thereby is able to significantly reduce particulate emission from diesel engine. Another particular advantageous feature of the present invention is that it not only reduces the level of contaminants in exhaust gases, but it also improves engine efficiency and fuel mileage unlike the action of catalytic converters and traps located in the exhaust pipes that could drastically deteriorate the efficiency of engine.

Another particular advantageous feature of the present invention is that it can be installed, easily and inexpensively, not only to new engines but also to existing ones without modifying the operating condition or structure of engine.

Yet another advantageous feature of the present invention is that it can reduce other harmful emissions like HC, CO, NOx and SOx without the aid of catalytic converters. However, the present invention does not restrict the usage of catalytic converters that help to further reduce these harmful emissions.

At least one electrode may be covered with glass to avoid any damage of metal electrode by corona discharge, which significantly prolongs the life of devise.

The frequency of power supply adapted to provide electrical power to the corona discharge device must be at least about 1,000 Hz to produce ozone effectively. The power supply is preferably configured and adapted to produce at least 4 kV at a frequency of from about 1 to about 1,000 kHz to produce ozone more effectively. The higher the frequency becomes, the more ozone generated, however, the more electrical power is, in turn, lost during traveling the transmission line from the power supply to the corona discharge device. The prescribed range of frequency is appropriate for both ozone generation and power transmission.

Exhaust gas may be passed through a cold trap that is cooled down to less than 338 °C, which is the boiling point of $H_2SO_4$, to reduce emission of $H_2SO_4$ to environment. The temperature of exhaust gas may be cooled down to less than 120°C, which is the boiling point of concentrated $HNO_3$, to further reduce emission of $HNO_3$ to environment.

Exhaust gas may be passed through a porous body whose surface is covered, at least partly, by powder containing, at least, one of the following compounds; Pt, PbO2, MnO2 or CuO, which effectively decompose excessive ozone before emission to the environment, and prevent the ground level ozone concentration from increasing.

DETAILED DESCRIPTION OF THE PREFERRED EMBODIMENT

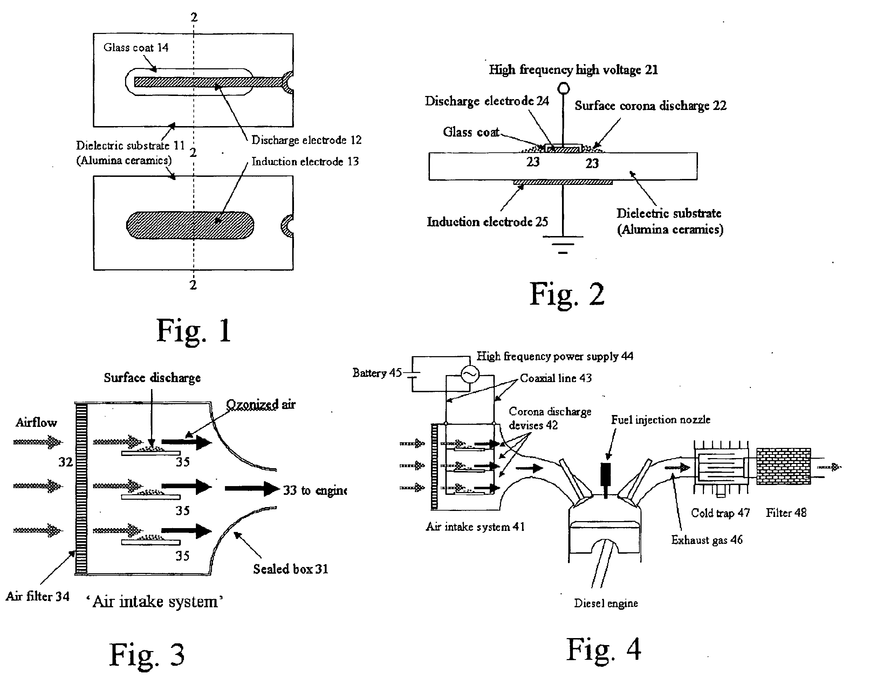

FIG. 1 is a plane view of a corona discharge device for producing ozone. The top and bottom figures show one and another sides of this devise, respectively. The dielectric substrate 11 is made of alumina ceramics according to a preferred embodiment of the invention, however, any kinds of insulating materials can be used for this part. The thickness of alumina substrate is typically about 0.5 mm; the thinner it becomes, the more ozone is generated with the sacrifice of strength. Thin metal electrodes, 12 and 13, are attached on both sides of a substrate. As shown in this figure, the area of one electrode 12 must be substantially smaller than the one of the other electrode 13 to effectively generate surface discharge. The smaller electrode 12 is coated with glass 14 according to a preferred embodiment of the invention to avoid any damage of metal electrode by corona discharge. The glass preferably does not contain Pb that is known to be harmful for health and environment.

FIG. 2 is a side cross section of the corona discharge device of FIG. 1, taken along line 2—2, showing how surface corona discharge occurs on this devise. Upon supplying high frequency high voltage 21 to both electrodes, surface corona discharge 22 is generated at the part 23 that the area of smaller electrode 24 is subtracted from the area of larger electrode 25. This surface corona discharge produces ozone effectively as much as more than hundred times the ultraviolet light does.

FIG. 3 is a schematic showing the corona discharge device of FIG. 1 in an air intake system. The air intake system is composed of a sealed box 31 with two openings; at one large opening 32 an air filter 34 is installed, and the other smaller opening 33 is connected to a combustion chamber of diesel engine. The corona discharge devices 35 of FIG. 1 are installed at the space between two openings inside the air intake system. The number of corona discharge devices is indefinite, and can be optimized depending on various factors, the number of electrodes per one dielectric substrate, the frequency and voltage of power supply, the displacement volume of diesel engine, and etc. The substrates of these corona discharge devices are placed parallel to the airflow such that they do not disturb the airflow, and ozone is mixed well with the airflow.

FIG. 4 is a schematic showing a whole system according to a preferred embodiment of the invention. The air intake system 41 of FIG. 3 is installed the corona discharge devices 42 of FIG. 1, which is connected by the coaxial lines 43 with the power supply 44 that generates high frequency high voltage from the dc battery 45 commonly installed in all types of diesel automotives. According to a preferred embodiment of the invention, the exhaust gas 46 is first passed through the cold trap 47 that is cooled by the airflow passing outside this trap, and then is passed through the filter 48 made of a porous body whose surface is completely covered by $MnO_2$ power.

Table 1 compares the amount of particulates with and without the ozone-generating device 42 in the air intake system. It is evident that the higher the load to engine becomes, the more the particulates emission is reduced. At high load, the reduction is as much as 80 %. Table 2 compares the amount of NOx and SOx, and the mileage with and without the ozone-generating device at the normal driving condition. It is apparent that both NOx and SOx emissions are reduced, especially SOx, while the mileage is significantly increased with the ozone-generating device.

It will be apparent to those skilled in the art that many changes and substitutions can be made to the preferred embodiment herein described without departing from the spirit and scope of the present invention as defined by the appended claims.

Table 1:

| Comparison of the amount of particulates with and without ozone-generating device. | | | |
|---|---|---|---|
| Driving condition | Amount of particulates (g/m$^3$N) | | Comparison (%) |
| | Without device | With device | |
| Idling | 0.024 | 0.019 | -21 |
| Constant speed (60 km/h) | 0.036 | 0.021 | -42 |
| Normal driving (downtown) | 0.089 | 0.031 | -65 |
| High load (accelerated) | 0.183 | 0.037 | -80 |

Table 2:

| Comparison of the amount of NOx and SOx, and the mileage with and without ozone-generating device (normal driving condition). | | | |
|---|---|---|---|
| | Without device | With device | Comparison (%) |
| NOx (ppm) | 98 | 80 | -18 |
| SOx (ppm) | 270 | 29 | -89 |
| Mileage (km/l) | 9.25 | 11.88 | +28 |

**Claims**

1. A method for operating a diesel engine with reduced emission of particulates as well as HC, NOx, SOx and CO, comprising

   a corona discharge device for producing ozone in the air intake system, the corona discharge device comprising at least one first electrode, at least one second electrode positioned a distance from the first electrode and a dielectric material positioned between the first electrode and the second electrode; and

a high frequency power supply having an operational frequency of at least about 1,000 Hz adapted to provide electrical power to the corona discharge device.

2. A method according to claim 1 wherein at least one electrode is covered with glass.

3. A method according to claim 1 wherein the power supply is configured and adapted to produce at least 4 kV at a frequency of from about 1 to about 1,000 kHz.

4. A method according to claim 1 wherein exhaust gas is passed through a cold trap that decreases the temperature of exhaust gas to less than 338 °C.

5. A method according to claim 1 wherein exhaust gas is passed through a porous body whose surface is covered, at least partly, by powder containing, at least, one of the following compounds; Pt, PbO2, MnO2 or CuO.

Glass coat 14

Discharge electrode 12

Dielectric substrate 11
(Alumina ceramics)

Induction electrode 13

**Fig. 1**

High frequency high voltage 21

Discharge electrode 24    Surface corona discharge 22

Glass coat

23    23

Induction electrode 25    Dielectric substrate
(Alumina ceramics)

**Fig. 2**

Surface discharge

Ozonized air

Airflow

32    35

35    33 to engine

35

Air filter 34    'Air intake system'    Sealed box 31

**Fig. 3**

High frequency power supply 44

Battery 45    Coaxial line 43

Corona discharge    Fuel injection nozzle
devises 42

Air intake system 41    Cold trap 47    Filter 48

Exhaust gas 46

Diesel engine

**Fig. 4**

**European Patent Office**

**EUROPEAN SEARCH REPORT**

Application Number

EP 01 10 9005

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 519 357 A (MCALLISTER DON M) 28 May 1985 (1985-05-28) * column 2, line 35 - column 3, line 6; figures * | 1-3 | F02M25/12 F02M27/04 C01B13/11 |
| Y | GB 2 284 771 A (FORD MOTOR CO) 21 June 1995 (1995-06-21) * page 3, line 16 - line 22; figure * | 1 | |
| Y | EP 0 043 477 A (PRUSS GUNTER) 13 January 1982 (1982-01-13) * abstract; figures * | 1 | |
| Y | US 4 051 043 A (HARTER JOSEPH WILLIAM ET AL) 27 September 1977 (1977-09-27) * column 1, line 56 - line 68 * | 1 | |
| Y | GB 2 084 244 A (PERSINGER JAMES GARLAND) 7 April 1982 (1982-04-07) * page 1, line 33 - line 44; figures * | 1 | |
| E | EP 1 103 519 A (KINOSHITA YUKIO) 30 May 2001 (2001-05-30) * column 6, line 5 - line 17 * | 1 | TECHNICAL FIELDS SEARCHED (Int.Cl.7) F02M C01B |
| A | PATENT ABSTRACTS OF JAPAN vol. 2000, no. 04, 31 August 2000 (2000-08-31) & JP 2000 018107 A (HOME VALUE JAPAN:KK;ICHIKAWA MASAHIDE; WAKABAYASHI TAKASHI), 18 January 2000 (2000-01-18) * abstract * | 1 | |

The present search report has been drawn up for all claims

| Place of search | Date of completion of the search | Examiner |
|---|---|---|
| THE HAGUE | 19 July 2001 | Alconchel y Ungria,J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 10 9005

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2001

| Patent document cited in search report | | Publication date | Patent family member(s) | | Publication date |
|---|---|---|---|---|---|
| US 4519357 | A | 28-05-1985 | CA | 1199540 A | 21-01-1986 |
| | | | EP | 0104739 A | 04-04-1984 |
| | | | JP | 59136555 A | 06-08-1984 |
| | | | JP | 63046265 B | 14-09-1988 |
| GB 2284771 | A | 21-06-1995 | NONE | | |
| EP 0043477 | A | 13-01-1982 | DE | 3025500 A | 04-02-1982 |
| | | | DE | 3037129 A | 13-05-1982 |
| | | | JP | 57079222 A | 18-05-1982 |
| US 4051043 | A | 27-09-1977 | US | 4156638 A | 29-05-1979 |
| GB 2084244 | A | 07-04-1982 | AU | 6404480 A | 01-04-1982 |
| | | | DE | 3042363 A | 13-05-1982 |
| | | | FR | 2491151 A | 02-04-1982 |
| | | | JP | 57059051 A | 09-04-1982 |
| EP 1103519 | A | 30-05-2001 | NONE | | |
| JP 2000018107 | A | 18-01-2000 | NONE | | |

EPO FORM P0459

For more details about this annex : see Official Journal of the European Patent Office, No. 12/82